Europäisches Patentamt

European Patent Office

Office européen des brevets

(11) Veröffentlichungsnummer: **0 499 937 A1**

## EUROPÄISCHE PATENTANMELDUNG

(21) Anmeldenummer: **92102191.1**

(22) Anmeldetag: **10.02.92**

(51) Int. Cl.5: **H01M 8/12**, C04B 35/42, C04B 35/00, C01G 45/00, C01G 37/00

(30) Priorität: **16.02.91 DE 4104838**

(43) Veröffentlichungstag der Anmeldung: **26.08.92 Patentblatt 92/35**

(84) Benannte Vertragsstaaten: **CH DE FR GB LI SE**

(71) Anmelder: **ABB PATENT GmbH** **Kallstadter Strasse 1** **W-6800 Mannheim 31(DE)**

(72) Erfinder: **Stadelmann, Heinz, Dr.** **Im Schilling 16** **W-6906 Leimen(DE)** Erfinder: **Reich, Endre** **Altstadter Strasse 55** **W-6900 Heidelberg(DE)**

(74) Vertreter: **Rupprecht, Klaus, Dipl.-Ing. et al** **c/o ABB Patent GmbH, Postfach 10 03 51** **W-6800 Mannheim 1(DE)**

(54) **Keramisches Material zur Herstellung einer Verstärkungsschicht für die Luftelektrode einer Brennstoffzelle mit Festelektrolyt.**

(57) Mit der Erfindung wird vorgeschlagen, eine elektrisch gut leitende Verstärkungsschicht (17) für Hochtemperatur-Brennstoffzellen (4) aus einem keramischen Material herzustellen, das eine Verbindung des Typs $LaMO_3$ ist mit M = Mn, Cr, wobei das La partiell durch Mg und Ca ersetzt ist. Geeignet sind beispielsweise die Verbindungen $La_{0,2}Mg_{0,2}Ca_{0,6}MnO_3$ und $La_{0,2}Mg_{0,2}Ca_{0,6}CrO_3$. Das erfindungsgemäße Material weist sehr gute Benetzungseigenschaften auf und ermöglicht dadurch ein Zusammensintern der Verstärkungsschicht (17) mit einer dünnen Luftelektrode (6) der Brennstoffzelle (4).

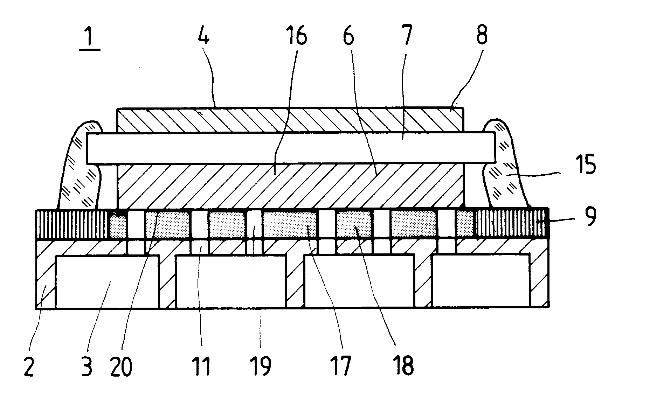

Signifikant ist die einzige Figur der Zeichnung.

EP 0 499 937 A1

Die Erfindung bezieht sich auf ein keramisches Material zur Herstellung einer Verstärkungsschicht für die Luftelektrode einer Brennstoffzelle mit einem Festelektrolyten.

Brennstoffzellenanordnungen und Brennstoffzellenbatterien, auf die sich die Erfindung im weiteren Sinne bezieht, sind aus der DE-OS 39 07 485 bekannt. Dieser Druckschrift sind Einzelheiten zum Aufbau und zur Arbeitsweise einer Brennstoffzellen-Batterie zu entnehmen, die Brennstoffzellenanordnungen mit Gruppen von in Serie oder parallel geschalteten Brennstoffzellen enthält. In einer solchen Brennstoffzellen-Batterie wird den Kathoden der Brennstoffzellen ein sauerstoffhaltiges Gas, z.B. Luft, zugeleitet und an den Außenflächen der Anoden der Brennstoffzellen wird ein gasförmiger oder vergaster Brennstoff vorbeigeleitet. Der zum Aufbau der Brennstoffzellenanordnung benutzte Träger ist eine Grundplatte, auf der Brennstoffzellen nebeneinander angeordnet und elektrisch miteinander verbunden sind.

In den aus der DE-OS 39 07 485 bekannten Brennstoffzellenanordnungen ist ein poröser keramischer Träger eingesetzt. Anstelle eines porösen Trägers kann auch - abweichend vom Stand der Technik - ein gasdicht gesinterter Träger verwendet werden, der nur in seinen von Brennstoffzellen bedeckten Wandbereichen gasdurchlässig gestaltet ist, z.B. durch die Anordnung von Kanälen, die eine Zufuhr von sauerstoffhaltigem Gas, z.B. Luft, zur Kathode ermöglichen.

Die Brennstoffzellen können, wie in der DE-OS 39 07 485 beschrieben, in einzelnen Schichten nacheinander auf den keramischen Träger aufgebracht werden oder können auch als Komponenten vorgefertigt und anschließend mit dem Träger verbunden werden.

Unabhängig von den unterschiedlichen Gestaltungsmöglichkeiten für Brennstoffzellenanordnungen besteht das Problem, daß an die Luftelektrode sich wiedersprechende Anforderungen hinsichtlich Gasdurchlässigkeit und elektrische Leitfähigkeit gestellt werden. Da sich an der Grenzfläche zwischen Luftelektrode, Gas und Elektrolyt die elektrochemischen Reaktionen zur Stromgewinnung abspielen, ist eine hohe Porosität des Kathodenmaterials notwendig, d.h. die Anzahl der katalytischen Zentren soll hoch sein. Die Kathodenelektrode soll außerdem möglichst dünn sein, um einen Gastransport an diese Zentren zu gewährleisten. Einer dünnen und porösen Ausführung der Kathodenelektrode steht aber die außerdem bestehende Forderung nach guter elektrischer Leitfähigkeit entgegen.

Dieses Problem kann dadurch gelöst werden, daß die kathodenseitige Luftelektrode in zwei Funktionsbereiche aufgeteilt wird, nämlich in eine dünne Schicht aus porösem Kathodenmaterial, die auf den Festelektrolyten aufgebracht wird und in eine dickere elektrisch gut leitende, zu Leiterbahnen strukturierte Schicht eines keramischen Materials. Die dünne poröse Kathodenschicht ist bezüglich der katalytischen Umsetzung optimiert und ermöglicht einen raschen Gasaustausch und somit eine hohe Umsetzrate der Luftelektrode. Die als Elektrodenverstärkung vorgesehene zweite Luftelektrodenschicht kann bezüglich ihrer elektrischen Leitfähigkeit optimiert werden. Eine hohe elektrische Leitfähigkeit ist erwünscht zur Verbesserung der Querleitfähigkeit der Elektrode, da der Strom zu Leiterbahnen geführt werden muß, die jeweils am Rand der Brennstoffzellen angeordnet sind.

In der DE-OS 39 07 485 ist als Kathodenmaterial ein strontiumdotiertes Lanthanmanganit $La_{1-x}Sr_xMnO_3$ genannt. Dieses Material ist geeignet zur Herstellung der dünnen porösen ersten Luftelektrodenschicht. Eine Anregung zur Wahl eines geeigneten Materials für die zweite Luftelektrodenschicht ist dem Stand der Technik nicht zu entnehmen.

Die zweite Luftelektrodenschicht kann als Verstärkungsschicht auf die erste Luftelektrodenschicht z.B. im Siebdruckverfahren strukturiert aufgetragen werden zur Herstellung einer einzelnen Brennstoffzelle mit verstärkter Elektrode. Die zweite Elektrodenschicht kann aber auch zu Leiterbahnen strukturiert auf einen Träger aufgebracht werden, auf dem anschließend vorbereitete Brennstoffzellen mit einer dünnen Luftelektrode aufgelegt und in einem Sinterprozeß mit dem Träger verbunden werden. In jedem Fall besteht die Notwendigkeit, die erste und die zweite Luftelektrodenschicht in einem Sinterprozeß miteinander zu verbinden, wobei gute materialschlüssige Verbindung angestrebt wird, um einen niedrigen elektrischen Übergangswiderstand zwischen den beiden Elektrodenschichten zu erzielen.

Davon ausgehend liegt der Erfindung die Aufgabe zugrunde, ein Material zur Herstellung einer Verstärkungsschicht für eine Luftelektrode einer Brennstoffzelle mit Festelektrolyt anzugeben, das beim Zusammensintern mit der porösen Luftelektrode gute Benetzungseigenschaften aufweist.

Diese Aufgabe wird gelöst durch eine Verbindung des Typs $LaMO_3$ mit M = Mn, Cr, wobei das La durch die Erdalkalimetalle Mg und Ca partiell ersetzt ist.

Bevorzugte derartige Perowskite sind $La_{0,2}Mg_{0,2}Ca_{0,6}MnO_3$ oder $La_{0,2}Mg_{0,2}Ca_{0,6}CrO_3$. Diese Materialien haben nicht nur eine niedrigschmelzende Flüssigphase, die in der Lage ist, die poröse Luftelektrode gut zu benetzen, sondern haben auch eine wünschenswert hohe spezifische elektrische Leitfähigkeit, die typisch eine Größenordnung über derjenigen der porösen Luftelektrode liegt. Wie nachstehend anhand eines in der Zeichnung dargestellten Verwendungsbeispiels näher erläutert wird, weist das vorgeschlagene Material noch weitere Vorteile auf.

In der Zeichnung ist eine Brennstoffzellenanordnung 1 mit einem Träger 2 dargestellt, der aus einer gasdicht gesinterten Keramik besteht und Kanäle 11 aufweist, die einen Luftdurchtritt aus Hohlräumen 3 zu der Kathodenelektrode einer Brennstoffzelle 4 ermöglichen. Die Kathodenelektrode 6 ist als dünne poröse erste Luftelektrodenschicht 16 ausgeführt und z.B. im Siebdruckverfahren auf einen Festelektrolyt 7 der Brennstoffzelle 4 aufgebracht. Die andere Hauptfläche des Festelektrolyten 7 trägt eine Anode 8. Zwischen dem Träger 2 und der Kathode 6 ist eine zweite Luftelektrodenschicht 17 angeordnet, die als Verstärkungsschicht den Strom zwischen der Kathode 6 und einer elektrisch leitenden Verbindungsschicht 9 leitet. Die elektrisch leitende Verbindungsschicht 9 leitet den Strom zu weiteren nicht dargestellten Brennstoffzellen einer Brennstoffzellenanordnung in einer Brennstoffzellenbatterie. Beim Betrieb der Brennstoffzellen wird an der Anode 8 ein Brenngas, z.B. Wasserstoff, vorbeigeleitet. Zur sicheren Abdichtung zwischen dem Brenngas und luftführenden Räumen kann eine Glasschicht 15 vorgesehen werden. Die Abdichtung mit Glas ist jedoch nicht unbedingt notwendig, da der Träger 2 gasdicht ist, die Kathode sehr dünn ist und die Verstärkungsschicht 17 auf vorteilhafte Weise sowohl gasdicht als auch gegen Wasserstoff beständig ist. Um einen Luftdurchtritt durch die gasdichte Verstärkungsschicht 17 zu ermöglichen, ist diese zu Leiterbahnen 18 strukturiert, so daß Zwischenräume 19 für den Luftdurchtritt verbleiben. Die Kanäle 11 im Träger 2 und die Zwischenräume 19 liegen übereinander.

Erfindungsgemäß besteht die Verstärkungsschicht aus einer Verbindung des Typs $LaMO_3$ mit M = Mn, Cr, wobei das Lanthan partiell durch leichtere Erdalkalimetalle Mg und Ca ersetzt ist. Durch Verwendung eines solchen Perowskit wird erreicht, daß beim Sintervorgang, mit dem die Kathode 6 mit der Verstärkungsschicht 17 verbunden wird, eine niedrigschmelzende Flüssigphase 20 mit stark benetzenden Eigenschaften besteht. Geeignet ist z.B. die Verbindung $La_{0,2}Mg_{0,2}Ca_{0,6}MnO_3$, deren Einbrenntemperatur bei 1450°C liegt. Auch mit der Verbindung $La_{0,2}Mg_{0,2}Ca_{0,6}CrO_3$ wurden gute Ergebnisse erzielt. Schon bei einer Temperatur von 1280°C kann eine gute elektrische und mechanische Verbindung zwischen der Kathode 6 und der Verstärkungsschicht 17 mit Hilfe der glasartigen Klebeschicht 20 erzielt werden.

**Patentansprüche**

1.  Keramisches Material zur Herstellung einer Verstärkungsschicht für die Luftelektrode einer Brennstoffzelle mit einem Festelektrolyten, dadurch gekennzeichnet, daß das keramische Material eine Verbindung des Typs $LaMO_3$ mit M = Mn, Cr ist, wobei das La partiell durch die Erdalkalimetalle Mg und Ca ersetzt ist.

2.  Keramisches Material nach Anspruch 1, dadurch gekennzeichnet, daß das Material $La_{0,2}Mg_{0,2}Ca_{0,6}MnO_3$ ist.

3.  Keramisches Material nach Anspruch 1, dadurch gekennzeichnet, daß das Material $La_{0,2}Mg_{0,2}Ca_{0,6}CrO_3$ ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 415 455 (AGENCY OF INDUSTRIAL SCIENCE & TECHNOLOGY) <br> * Seite 2, Absatz 5 * <br> * Seite 3, Absatz 2 -Absatz 3; Anspruch 2 * <br> --- | 1 | H01M8/12 <br> C04B35/42 <br> CD4B35/D0 <br> C01G45/00 <br> C01G37/0D |
| X | WORLD PATENTS INDEX <br> Derwent Publications Ltd., London, GB; <br> AN 77-49509Y <br> & JP-A-52 065 894 (MINO YOGO KK.) 31. Mai 1977 <br> * Zusammenfassung * <br> --- | 1 | |
| A | EP-A-0 337 036 (WESTINGHOUSE ELECTRIC CORPORATION) <br> * Seite 6, Zeile 38 - Zeile 48 * <br> * Seite 7, Zeile 4 - Zeile 7 * <br> * Seite 7, Zeile 18 - Zeile 22; Anspruch 1 * <br> --- | 1 | |
| A | WO-A-8 803 332 (UNIVERSITY OF CHICAGO) <br> * Seite 5, Zeile 31 - Zeile 34 * <br> --- | 1 | |
| A | EP-A-0 188 868 (WESTINGHOUSE ELECTRIC CORPORATION) <br> * Anspruch 1 * <br> --- | | **RECHERCHIERTE SACHGEBIETE (Int. Cl.5)** |
| A | EP-A-0 188 056 (WESTINGHOUSE ELECTRIC CORPORATION) <br> * Anspruch 5 * <br> --- | | H01M <br> C04B <br> C01G |
| A | EP-A-0 387 643 (ASEA BROWN BOVERI) <br> * Spalte 5, Zeile 13 - Zeile 15 * <br> --- | | |
| P,X | EP-A-0 467 590 (NGK INSULATORS, LTD.) <br> * Anspruch 1 * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 03 JUNI 1992 | D'HONDT J.W. |

EPO FORM 1503 03.82 (P0400)